# EUROPÄISCHE PATENTSCHRIFT

(11) **EP 1 371 530 B1**
(45) Veröffentlichungstag und Bekanntmachung des Hinweises auf die Patenterteilung: **17.10.2007**
(21) Anmeldenummer: 03012751.8
(22) Anmeldetag: 05.06.2003
(51) Int. Cl.: B60R 22/22

(54) **Befestigungseinrichtung**
Fastening assembly
Dispositif de fixation

(30) Priorität: 12.06.2002 DE 10226051
(43) Veröffentlichungstag der Anmeldung: 17.12.2003
(73) Patentinhaber: ADAM OPEL AG, 65423 Rüsselsheim (DE)
(72) Erfinder: Martin, Roger, 64572 Klein-Gerau (DE)
(74) Vertreter: Daniel, Ulrich W.P.

(56) Entgegenhaltungen:
- DE-U- 29 615 407
- GB-A- 2 261 809
- US-A- 4 674 801
- US-A- 5 415 430
- US-B1- 6 224 129
- PATENT ABSTRACTS OF JAPAN Bd. 2000, Nr. 13, 5. Februar 2001 (2001-02-05) -& JP 2000 280860 A (NISSAN MOTOR CO LTD), 10. Oktober 2000 (2000-10-10)

## Beschreibung

Die Erfindung bezieht sich auf eine Befestigungseinrichtung eines Gurtendbeschlages eines Sicherheitsgurtes an einem festen Bauteil, insbesondere an einem Bodenblech eines Kraftfahrzeugs, mit einem Grundplattenabschnitt und mit einem gegenüber dem Grundplattenabschnitt winklig abgebogenen Winkelplattenabschnitt des Gurtendbeschlags, an dem ein Ende des Sicherheitsgurtes angeordnet ist, wobei der Grundplattenabschnitt eine durchgehende Ausnehmung aufweist, in seiner Einbaulage auf das feststehende Bauteil des Kraftfahrzeugs aufsetzbar und mittels einer die Ausnehmung des Grundplattenabschnitts und eine etwa koaxial zur Ausnehmung des Grundplattenabschnitts in dem festen Bauteil ausgebildete weitere Ausnehmung, insbesondere eine Gewindebohrung durchragenden Schraube mit dem festen Bauteil verbindbar ist.

So beschreibt die JP 2000 280860 A einen Gurtendbeschlag, der mittels einer Schraube an dem Bodenblech eine Kraftfahrzeuges angebracht werden kann. Um zu verhindern, dass der Gurtendbeschlag während des Festschraubens um die Schraubenachse rotiert, ist in dem Bodenblech eine hervorstehende Bördelung vorgesehen, an der die Kante des Gurtendbeschlages anliegt, so dass ein Verdrehen des Gurtendbeschlages unterbunden ist.

Eine ähnliche Befestigungseinrichtung ist aus der DE 296 15 407 U1 bekannt, die einen Gurtendbeschlag beschreibt, der einen seitlich hervorstehenden, flexiblen Lappen aufweist. Das Verdrehen des Gurtendbeschlages um die Achse der Befestigungsschraube wird verhindert, indem der seitlich hervorstehende Lappen an einem in der Nähe angeordneten Bauteil, wie beispielsweise der B-Säule, anschlägt.

Weiterhin beschreibt die US-A-5 415 430 einen Gurtendbeschlag, der eine nach unten weisende Zunge aufweist, die in eine Aussparung in dem Bodenblech ragt, um ein Verdrehen des Gurtendbeschlages um die Achse der Befestigungsschraube zu verhindern.

Bei der Montage derartiger bekannter Befestigungseinrichtungen eines Gurtendbeschlages für den Sicherheitsgurt eines Kraftfahrzeugs wird der Gurtendbeschlag mit seinem Grundplattenabschnitt so auf das Bodenblech des Kraftfahrzeugs aufgelegt, dass er mit seiner Ausnehmung die Gewindebohrung im Bodenblech überdeckt. Danach wird eine Schraube durch die Ausnehmung hindurchgeführt und von Hand um etwa zwei Gewindegänge in die Gewindebohrung eingeschraubt. Da an dem Gurtendbeschlag das Ende des Sicherheitsgurtes befestigt ist, der zu einem automatischen Gurtbandaufroller führt, ist der Sicherheitsgurt von einer Zugkraft beaufschlagt. Dabei muss bei dem weiteren Festschrauben des Gurtendbeschlages dieser von dem Monteur mit seiner einen Hand in der Einbaulage festgehalten werden, während der Monteur in seiner anderen Hand einen motorischen Schrauber zum Einschrauben der Schraube hält. Dabei kommt es zu einer starken Beanspruchung des Handgelenks der Hand des Monteurs, die den motorischen Schrauber hält.

Aufgabe der Erfindung ist es daher, eine Befestigungseinrichtung der eingangs genannten Art zu schaffen, die eine Montage des Gurtendbeschlages ohne hohe Beanspruchung der Handgelenke des Monteurs ermöglicht.

Diese Aufgabe wird erfindungsgemäß dadurch gelöst, dass der Gurtendbeschlag ein Halteelement aufweist, das in der Einbaulage des Gurtendbeschlags mit einem Haltegegenelement des feststehenden Bauteils derart verbindbar ist, dass der Gurtendbeschlag entgegen der Zugkraft des Sicherheitsgurtes in der Einbaulage vorfixiert ist.

Diese Ausbildung ermöglicht es, dass der Gurtendbeschlag mittels des Halteelements mit dem Haltegegenelement des feststehenden Bauteils zunächst verbunden und somit an dem feststehenden Bauteil vorfixiert wird. Nun kann die Schraube durch die Ausnehmung in dem Grundplattenabschnitt geführt und um etwa zwei Windungen in die Gewindebohrung des Bodenblechs von Hand eingeschraubt werden. Da der Gurtendbeschlag in seiner Einbaulage vorfixiert ist, kann er nicht durch die Zugkraft des Gurtbandaufrollers von dem Gurtband aus seiner Einbaulage weggezogen werden. Ein Fest- und Niederhalten des Gurtendbeschlages durch den Monteur bei dem weiteren Verschrauben mittels des motorischen Schraubers ist nicht mehr erforderlich. Damit ist es möglich zum weiteren Verschrauben einen motorischen Winkelschrauber zu verwenden, der zu einer wesentlich geringeren Beanspruchung der Handgelenke des Monteurs führt, aber eine Zweihandbedienung erfordert, die nunmehr möglich ist.

In einer bevorzugten Ausführungsform der erfindungsgemäßen Befestigungseinrichtung ist das feststehende Bauteil, mit dem der Grundplattenabschnitt verbindbar ist, ein Bodenblech eines Kraftfahrzeuges.

In einer weiteren bevorzugten Ausführungsform der erfindungsgemäßen Befestigungseinrichtung ist die weitere Ausnehmung in dem feststehenden Bauteil, mit dem der Grundplattenabschnitt ver bindbar ist, eine Gewindebohrung.

Das Halteelement kann bauteilsparend einteilig mit dem Gurtendbeschlag ausgebildet sein.

Um eine komplizierte und aufwendig herstellbare Ausbildung des Gurtendbeschlags zu vermeiden, kann das Halteelement aber auch ein mit dem Gurtendbeschlag verbindbares Bauteil sein.

Eine einfache Verbindungsmöglichkeit besteht dabei darin, dass das Halteelement mittels einer Steckverbindung mit dem Gurtendbeschlag verbindbar ist.

Dazu kann in einfacher Ausbildung das Halteelement einen durchgehenden Halteschlitz etwa gleichen Querschnitts wie dem Querschnitt des Winkelplaittenabschnitts aufweisen und mit dem Halteschlitz auf den Winkelplatten abschnitt aufsteckbar sein.

Zur einfachen Durchführung der Vorfixierung des Gurtendbeschlags am Bodenblech kann das Halteelement ein oder mehrere Steckelemente aufweisen, die in entsprechende Steckaufnahmen des feststehenden Bauteils einführbar sind.

Dabei können die Steckelemente kraft- und/oder reib- und/oder formschlüssig in den Steckaufnahmen haltbar sein.

Eine andere, ebenfalls leicht montierbare Ausbildung besteht darin, dass die Steckelemente durch eine Rastverbindung in den Steckaufnahmen haltbar sind.

Die Steckelemente können in dem oder den seitlich sich an den Bereich der Abwinklung des Gurtendbeschlags anschließenden Bereichen angeordnet sein, was bei zwei Steckelementen zu einer besonders positionsstabilen Vorfixierung führt.

Das oder die Steckelemente können sich in oder entgegen der Erstreckungsrichtung des Grundplattenabschnittes erstrecken und in entsprechend sich erstreckende Steckaufnahmen des feststehenden Bauteils einführbar sein, so dass sie hakenartig den Gurtendbeschlag vorfixieren

Sind dabei die Steckaufnahmen durch Verformungen des Bodenblechs des Kraftfahrzeugs gebildet, so ist dazu kein besonderer Bauteil- und Montageaufwand erforderlich.

Es ist aber auch möglich, dass die Steckaufnahmen durch auf dem Bodenblech des Kraftfahrzeugs fest angeordnete Bauteile gebildet sind.

Eine andere Art der Vorfixierung besteht darin, dass das oder die Steckelemente sich senkrecht zum Grundplattenabschnitt erstrecken und in entsprechend sich erstreckende Steckaufnahmen des feststehenden Bauteils einführbar sind. Dabei wird das in die Steckaufnahme eingesteckte Steckelement ausreichend sicher in der Steckaufnahme gehalten.

In einfacher, keine zusätzlichen Elemente benötigenden und leicht montierbaren Ausbildung können die Steckaufnahmen Ausnehmungen im Bodenblech des Kraftfahrzeugs sein.

Um beim Festschrauben und/oder Lösen der Schrauben mit dem motorischen Schrauber ein Verdrehen des Gurtendbeschlags zu vermeiden, können eine oder beide Längsseiten des in Einbaulage befindlichen Grundplattenabschnitts an Anschlägen in Anlage sein, die das feststehende Bauteil aufweist.

Zusätzliche Bauteile werden dabei vermieden, wenn der oder die Anschläge aus der Ebene des Bodenblechs hervorstehende Verformungen des Bodenblechs des Kraftfahrzeugs sind.

Eine Doppelfunktion ergibt sich dabei, wenn die hervorstehenden Verformungen die Steckaufnahmen bilden oder in denen die Steckaufnahmen ausgebildet sind.

Ist das Halteelement ein Kunststoffbauteil, insbesondere ein Spritzguss-Kunststoffbauteil, so führt dies zu einer einfachen und leichten Herstellbarkeit.

Das Halteelement kann aber auch ein gestanztes und/oder gekantetes Blechteil sein.

Ausführungsbeispiele der Erfindung sind in der Zeichnung dargestellt und werden im folgenden näher beschrieben. Es zeigen
- Figur 1: eine perspektivischen Ansicht eines ersten Ausführungsbeispiels einer Befestigungseinrichtung eines Gurtendbeschlages
- Figur 2: eine perspektivische Forderansicht eines Halteelements der Befestigungseinrichtung nach Figur 1
- Figur 3: eine Draufsicht des Haltelements nach Figur 2
- Figur 4: eine Schnittansicht entlang der Linie IV - IV in Figur 5
- Figur 5: eine Seitenansicht des Halteelements nach Figur 2
- Figur 6: eine Schnittansicht entlang der Linie VI - VI in Figur 2
- Figur 7: eine Schnittansicht entlang der Linie VII - VII in Figur 2
- Figur 8: eine perspektivische Ansicht eines zweiten Ausführungsbeispiels einer Befestigungseinrichtung eines Gurtendbeschlags
- Figur 9: eine Vorderansicht eines Haltelements der Befestigungseinrichtung nach Figur 8
- Figur 10: eine Draufsicht eines Haltelements nach Figur 9
- Figur 11: eine Schnittansicht entlang der Linie Xl - Xl in Figur 12
- Figur 12: eine Seitenansicht des Haltelements nach Figur 9
- Figur 13: eine Schnittansicht entland der Linie XIII - XIII in Figur 9
- Figur 14: eine Schnittansicht entlang der Linie XIV - XIV in Figur 9
- Figur 15: eine perspektivische Ansicht eines dritten Ausführungsbeispiels einer Befestigungseinrichtung eines Gurtendbeschlags.
- Figur 16: eine Vorderansicht eines Halteelements der Befestigungeinrichtung nach Figur 15
- Figur 17: eine Draufsicht des Halteelements nach Figur 16
- Figur 18: eine Schnittansicht entlang der Linie XVIII - XVIII in Figur 19
- Figur 19: eine Seitenansicht des Halteelements nach Figur 16
- Figur 20: eine Schnittansicht entlang der Linie XX - XX in Figur 16
- Figur 21: eine Schnittansicht entlang der Linie XXI - XXI in Figur 16.

Die in den Figuren dargestellten Befestigungsvorrichtungen weisen einen Gurtendbeschlag 1 auf, der aus einem Grundplattenabschnitt 2 und einem winklig davon abgebogenen Winkelplattenabschnitt 3 besteht. In den vorliegenden Ausführungsbeispielen beträgt der Abbiegewinkel 90°. Es kann aber auch ein anderer Abbiegewinkel sein.

An dem Winkelplattenabschnitt 3 ist eine durchgehende Bohrung 4 ausgebildet, an der ein nicht dargestellter Sicherheitsgurt mit seinem einen Ende befestigbar ist. Der Sicherheitsgurt führt über einen ebenfalls nicht dargestellten, im oberen Bereich des Kraftfahrzeugs fest angeordneten Umlenkbeschlag zu einem automatischen Gurtbandaufroller, durch den der Sicherheitsgurt eine nach oben gerichtete Zugkraft auf den Gurtendbeschlag einwirkt.

Mit dem Grundplattenabschnitt 2 liegt der Gurtendbeschlag 1 auf dem Bodenblech 5 des Kraftfahrzeugs auf. Der Grundplattenabschnitt 2 besitzt eine durchgehende Ausnehmung 6, die in der dargestellten Einbaulage des Gurtendbeschlags 1 mit einer im Bodenblech 5 ausgebildeten Gewindebohrung 7 fluchtet.

Durch eine nicht dargestellte Schraube, die durch die Ausnehmung 6 des Gurtendbeschlags 1 geführt und in die Gewindebohrung 7 eingeschraubt wird, ist der Gurtendbeschlag 1 auf dem Bodenblech 5 befestigbar.

Um den Gurtendbeschlag vor dem Herstellen dieser Schraubbefestigung an dem Bodenblech 5 in der Einbaulage vorzufixieren, ist an dem Gurtendbeschlag 1 zunächst ein Haltelement 8, 8', 8" angeordnet worden, mittels dessen der Gurtendbeschlag 1 an dem Bodenblech 5 so befestigt wird, dass er in seiner Einbaulage fixiert ist.

Das Halteelement 8, 8', 8" ist ein Spritzguss-Kunststoffteil und besitzt einen laschenartigen Mittelteil 9 mit einem durchgehenden Halteschlitz 10 auf. Der Halteschlitz 10 besitzt etwa den gleichen Querschnitt wie der Winkelplattenabschnitt 3 des Gurtendbeschlags 1. Mit diesem Halteschlitz 10 ist das Halteelement 8, 8', 8" auf den Winkelplattenabschnitt 3 aufgeschoben.

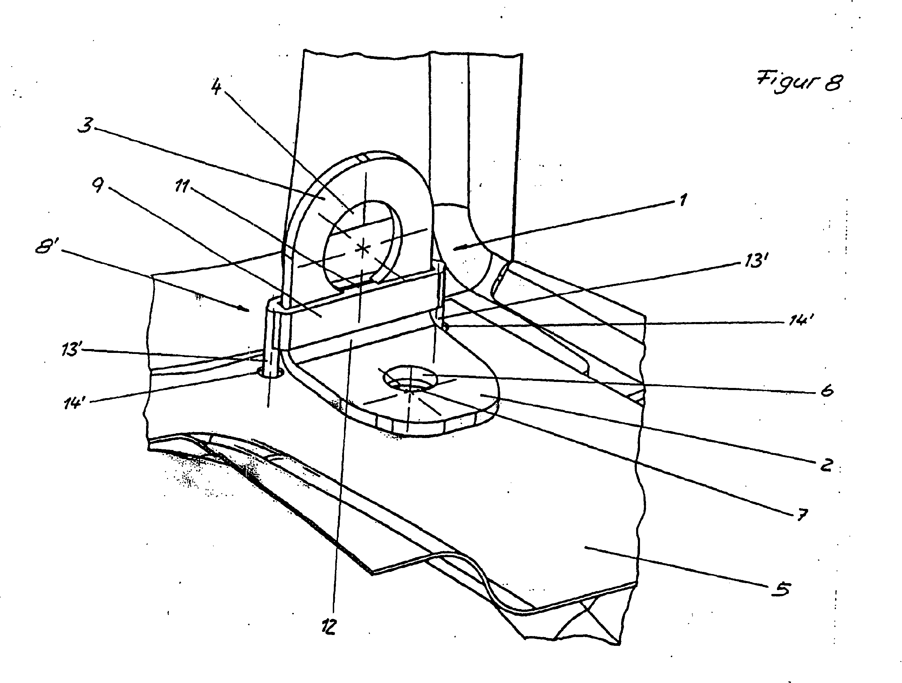

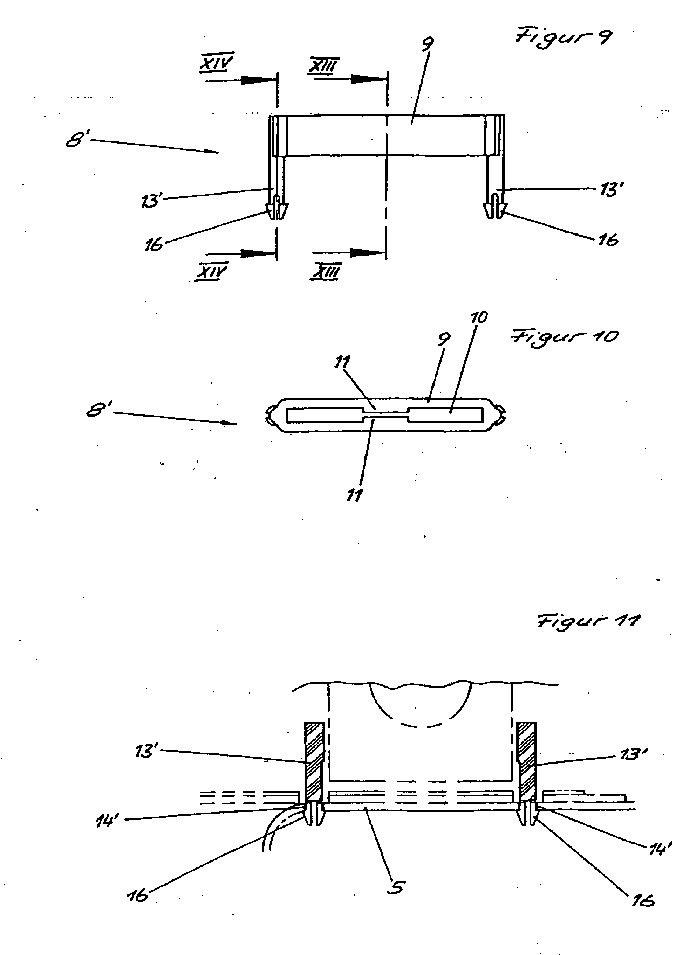

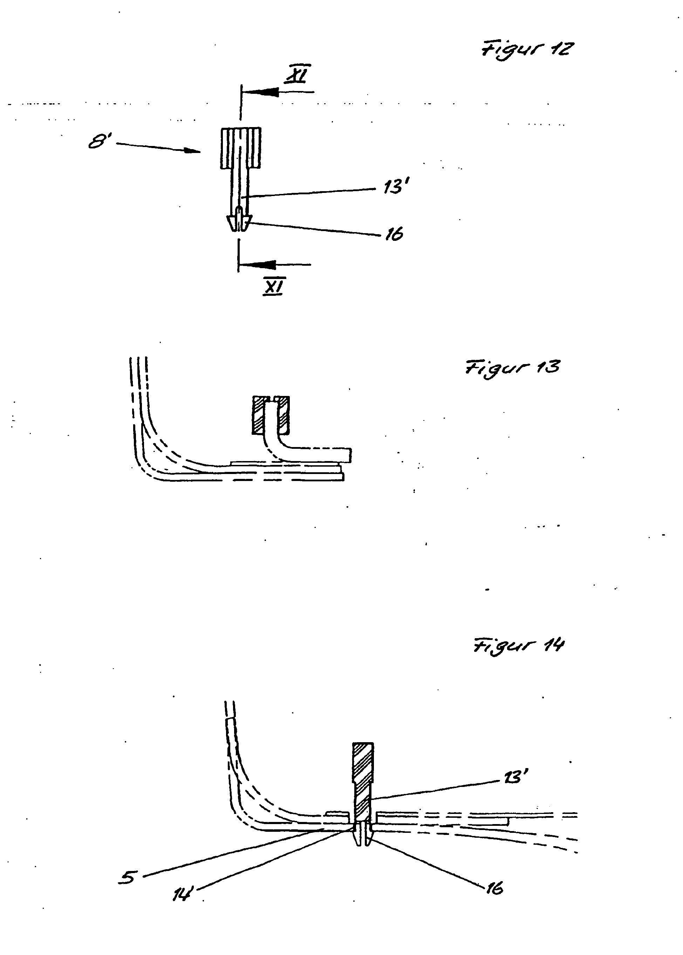

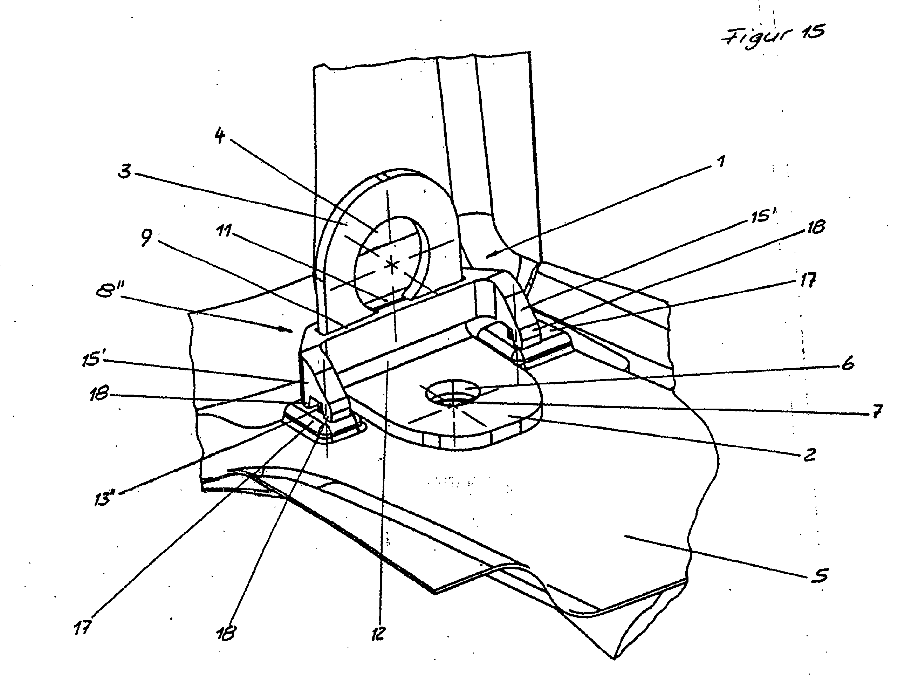

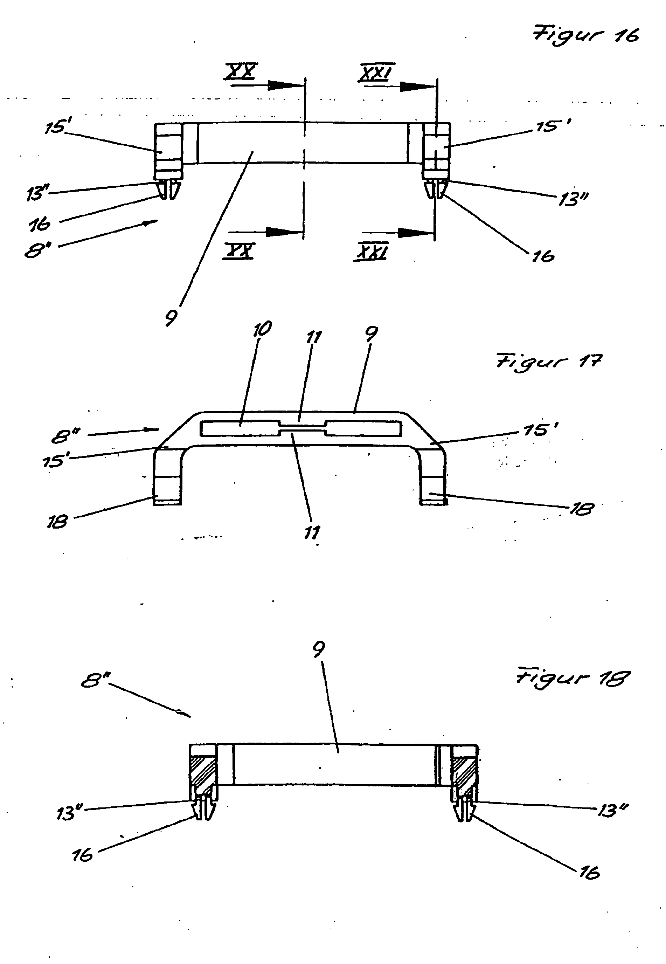

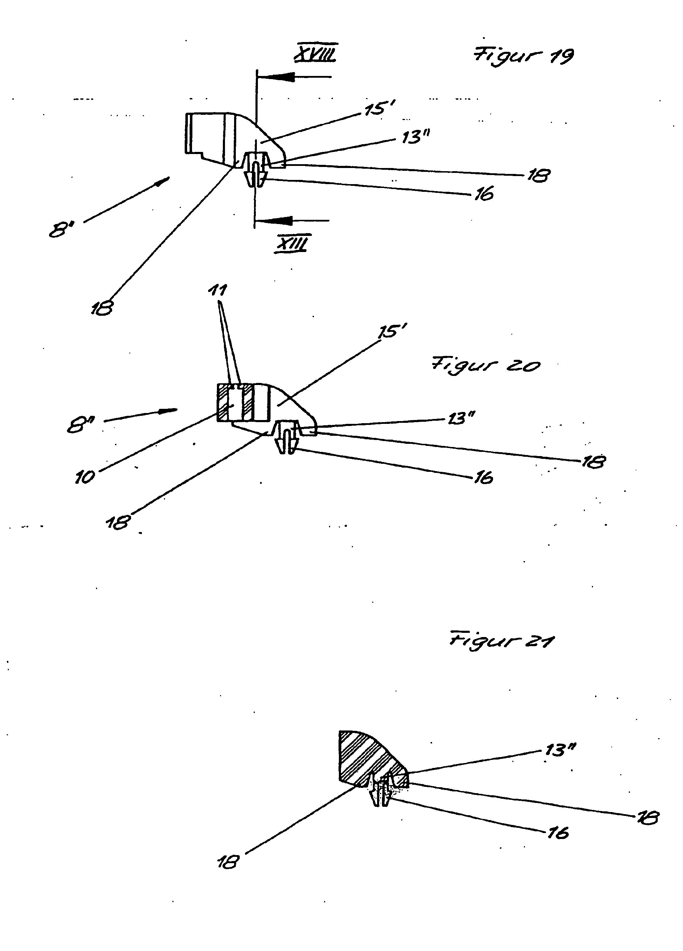

Bei den Ausführungsbeispielen der Figuren 8 bis 21 ragen im mittleren Bereich des Halteschlitzes 10 von beiden Seiten her Anschlagstücke 11 aufeinander zu. Sie definieren die exakte Aufschubtiefe des Halteelements 8' auf den Winkelplattenabschnitt 3, in dem sie beim Aufschieben des Halteelements 8', 8" zunächst eine elastische Aufweitung des Halteschlitzes 10 bewirken und dann in die Bohrung 4 einrasten. Sobald die Anschlagstücke 11 am unteren Bereich der Bohrung 4 zur Anlage gekommen sind, ist die exakte Endposition des Halteelements 8', 8" auf dem Winkelplattenabschnitt 3 erreicht.

Nachdem noch das eine freie Ende des Sicherheitsgurtes an der Bohrung 4 mit dem Gurtendbeschlag 1 verbunden wurde, kann nun die Vorfixierung des Gurtendbeschlags 1 an dem Bodenblech 5 erfolgen.

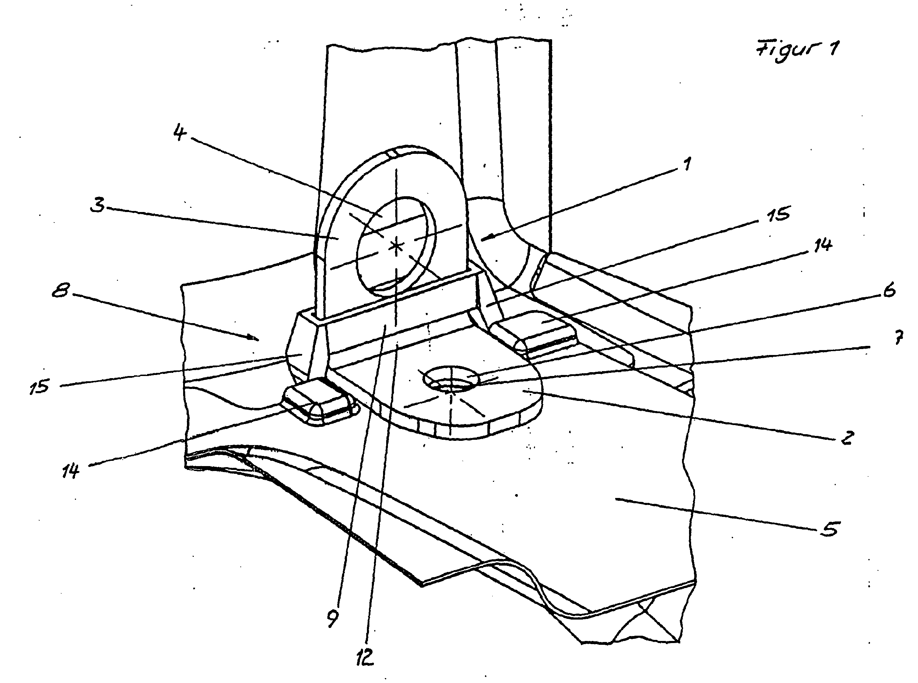

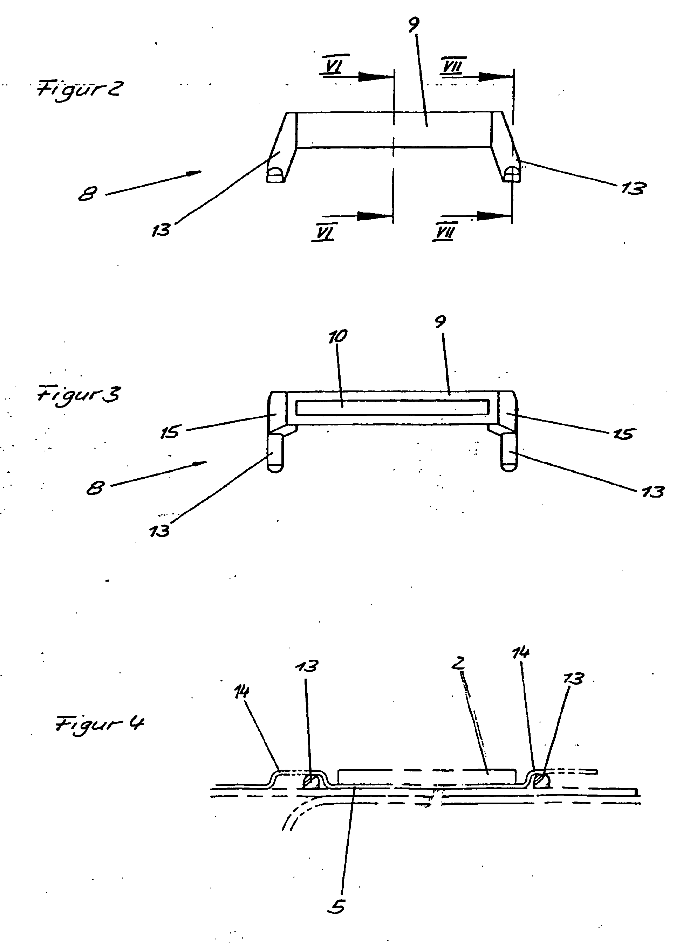

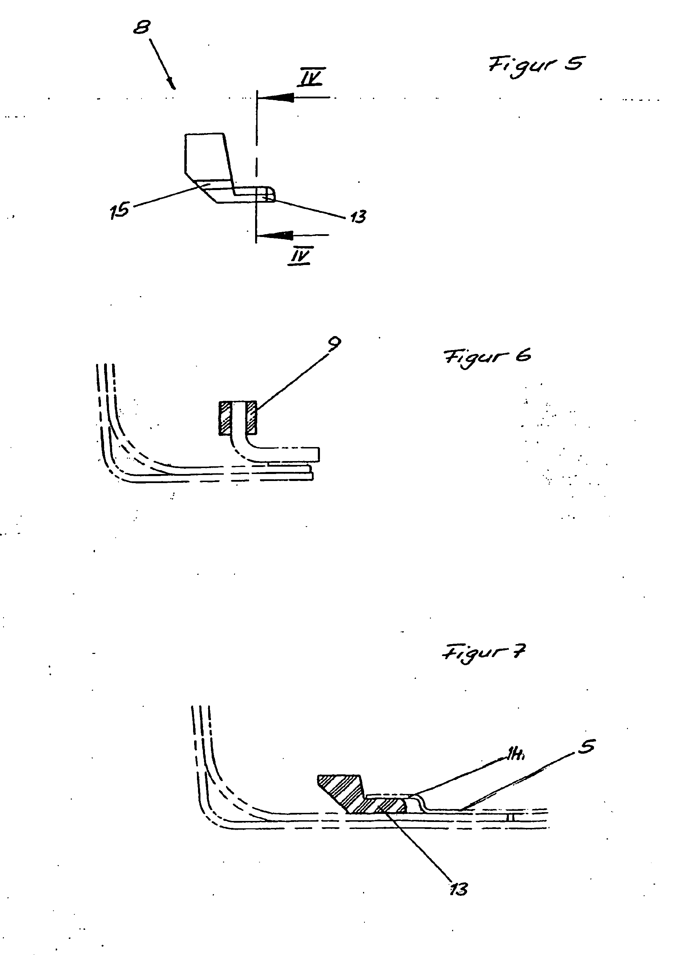

Bei dem Ausführungebeispiel der Figuren 1 bis 7 weist das Halteelement 8 an seinen unteren; seitlich sich an dem Bereich der Abwinklung 12 des Gurtendbeschlags 1 anschließenden Bereichen Steckelemente 13 auf, die sich stabartig in Erstreckungsrichtung des Grundplattenabschnitts 2 erstrecken. Diese Steckelemente 13 sind nach dem Aufsetzen des Grundplattenabschnitts 2 auf das Bodenblech 5 und Verschieben in Erstreckungsrichtung der Ebene des Bodenblechs 5 in Steckaufnahmen 14 einführbar und in denen kraftschlüssig haltbar.

Die Steckaufnahmen 14 sind durch erhabene taschenartige Verformungen des Bodenblechs 5 in den Seitenbereichen neben dem in Einbaulage befindlichen Grundplattenabschnitt 2 gebildet und besitzen an ihren der Erstreckungsrichtung des Grundplattenabschnitts 2 entgegengerichteten Enden die Einführöffnungen für die Steckelemente 13.

Die Steckelemente 13 werden so weit in die Steckaufnahmen 14 eingeführt, bis die Steckelemente 13 mit dem Mittelteil 9 verbindenden, senkrecht sich erstreckenden Verbindungsbereichen 15 des Halteelements 8 an der Mündungsöffnung der Steckaufnahme 14 zur Anlage kommen. Damit ist gleichzeitig die Ausnehmung 6 des Grundplattenabschnitts 2 in fluchende Überdeckung mit der Gewindebohrung 7 gelangt und von dem Gurtendbeschlag 1 die Einbaulage eingenommen. Durch das hakenartige Eingreifen der Steckelemente 13 in die Steckaufnahme 14 wird der Gurtendbeschlag 1 in dieser Einbaulage gehalten und kann nicht durch die Zugkraft des Sicherheitsgurtes von dem Bodenblech 5 abgehoben werden.

Dies ermöglicht es nun problemlos eine Schraube durch die Ausnehmung 6 in die Gewindebohrung zu schrauben und mittels eines motorischen Schraubers vollständig einzuschrauben. Dabei dienen die neben den Seitenbereichen des Grundplattenabschnitts 2 erhaben hervorstehenden Steckaufnahmen 14 gleichzeitig als Anschläge, die ein Verdrehen des Gurtendbeschlags 2 um die Längsachse der Schraube verhindern.

Bei dem Ausführungsbeispiel der Figuren 8 bis 14 sind ebenfalls an den unteren, seitlich sich an den Bereich der Abwinklung 12 des Gurtendbeschlags anschließenden Bereichen Steckelemente 13' angeordnet. Diese Steckelemente 13' sind zapfenartig ausgebildet und erstrecken sich senkrecht zum Grundplattenabschnitt 2. Die nach unten gerichteten freien Enden dieser Steckelemente 13' sind als clipsartige Rastköpfe 16 ausgebildet.

Die Steckaufnahmen 14' sind entsprechende Ausnehmungen im Bodenblech 5 des Kraftfahrzeugs, in die in der Einbaulage des Gurtendbeschlags 1 die Steckelemente 13' senkrecht zum Bodenblech 5 eingeführt werden und dort mit den Rastköpfen 16 eine Rastverbindung bildend verrasten. Dabei ist die Haltekraft der Rastverbindung ausreichend hoch, dass die Zugkraft des Sicherheitsgurtes den Gurtendbeschlag 1 nicht vom Bodenblech 5 abheben kann.

Nun kann, wie bei dem ersten Ausführungsbeispiel, die Schraube in die Gewindebohrung 7 eingeschraubt werden.

Die sich in einem Abstand parallel zur Längsachse der Schraube erstreckenden, in die Steckaufnahme 14' ragenden Steckelemente 13' bilden dabei gleichzeitig eine Verdrehsicherung für den Gurtendbeschlag 1.

Bei dem Ausführungsbeispiel der Figuren 15 bis 21 sind ähnlich wie im ersten Ausführungsbeispiel erhabene Verformungen 17 des Bodenblechs 5 in den Seitenbereichen neben dem in Einbaulage befindlichen Grundplattenabschnitt 2 gebildet. Diese Verformungen 17 dienen als Verdrehsicherung für den Gurtendbeschlag 1. In den Verformungen 17 sind rechtwinklig zum Bodenblech 5 Ausnehmungen ausgebildet, die Steckaufnahmen 14" bilden.

In diese Steckaufnahmen 14" sind ähnlich wie bei dem zweiten Ausführungsbeispiel zapfenartig ausgebildete Steckelemente 13" einführbar, die sich senkrecht zum Bodenblech 5 erstrecken und an den nach unten gerichteten freien Enden clipsartige Rastköpfe 16 aufweisen. Diese Rastköpfe verrasten wie bei dem zweiten Ausführungsbeispiel eine Rastverbindung bildend in den Steckaufnahmen 14".

Die Steckelemente 13" sind an Verbindungsbereichen 15' ausgebildet, die den Mittelteil 9 des Halteelements 8" mit dem Bereich der Steckelemente 13" verbinden. Die Verbindungsbereiche 15' erstrecken sich dabei in Erstreckungsrichtung des Grundplattenabschnitts 2. In dieser Erstreckungsrichtung sind vor und- hinter dem Steckelement 13" sich etwa in Richtung zum Bodenblech 5 erstreckende Federarme 18 an dem Verbindungsbereich 15' ausgebildet, die bei in die Steckaufnahme 14" eingerastetem Rastkopf 16 unter elastischer Vorspannung auf der Oberseite der Verformung 17 abgestützt sind.

### Bezugszeichenliste

- 1: Gurtendbeschlag
- 2: Grundplattenabschnitt
- 3: Winkelplattenabschnitt
- 4: Bohrung
- 5: Bodenblech
- 6: Ausnehmung
- 7: Gewindebohrung
- 8: Halteelement
- 8': Halteelement
- 8": Halteelement
- 9: Mittelteil
- 10: Halteschlitz
- 11: Anschlagstücke
- 12: Abwinklung
- 13: Steckelement
- 13': Steckelement
- 13": Steckelement
- 14: Steckaufnahme
- 14': Steckaufnahme
- 14": Steckaufnahme
- 15: Verbindungsbereich
- 15': Verbindungsbereich
- 16: Rastkopf
- 17: Verformung
- 18: Federarm

## Patentansprüche

1. Befestigungseinrichtung eines Gurtendbeschlages eines Sicherheitsgurtes an einem feststehenden Bauteil mit einem Grundplattenabschnitt und mit einem gegenüber dem Grundplattenabschnitt winklig abgebogenen Winkelplattenabschnitt des Gurtendbeschlags, an dem ein Ende des Sicherheitsgurtes angeordnet ist, wobei der Grundplattenabschnitt eine durchgehende Ausnehmung aufweist, in seiner Einbaulage auf das feststehende Bauteil des Kraftfahrzeugs aufsetzbar und mittels einer die Ausnehmung des Grundplattenabschnitts und eine etwa koaxial zur Ausnehmung des Grundplattenabschnitts in dem feststehenden Bauteil ausgebildete weitere Ausnehmung durchragenden Schraube mit dem feststehenden Bauteil verbindbar ist, **dadurch gekennzeichnet, dass** der Gurtendbeschlag (1) ein Halteelement (8, 8', 8") aufweist, das in der Einbaulage des Gurtendbeschlags (1) mit einem Haltegegenelement des feststehenden Bauteils derart verbindbar ist, dass der Gurtendbeschlag (1) entgegen der Zugkraft des Sicherheitsgurtes in der Einbaulage vorfixiert ist.

2. Befestigungseinrichtung nach Anspruch 1, **dadurch gekennzeichnet, dass** das feststehende Bauteil, mit dem der Grundplattenabschnitt verbindbar ist, ein Bodenblech eines Kraftfahrzeuges ist.

3. Befestigungseinrichtung nach einem der Ansprüche 1 oder 2, **dadurch gekennzeichnet, dass** die weitere Ausnehmung in dem feststehenden Bauteil, mit dem der Grundplattenabschnitt verbindbar ist, eine Gewindebohrung ist.

4. Befestigungseinrichtung nach einem der Ansprüche 1 bis 3, **dadurch gekennzeichnet, dass** das Halteelement einteilig mit dem Gurtendbeschlag ausgebildet ist.

5. Befestigungseinrichtung nach einem der Ansprüche 1 bis 3, **dadurch gekennzeichnet, dass** das Halteelement (8, 8', 8") ein mit dem Gurtendbeschlag (1) verbindbares Bauteil ist.

6. Befestigungseinrichtung nach Anspruch 5, **dadurch gekennzeichnet, dass** das Halteelement (8, 8', 8") mittels einer Steckverbindung mit dem Gurtendbeschlag (1) verbindbar ist.

7. Befestigungseinrichtung nach Anspruch 6, **dadurch gekennzeichnet, dass** das Halteelement (8, 8', 8") einen durchgehenden Halteschlitz (10) etwa gleichen Querschnitts wie dem Querschnitt des Winkelplattenabschnitts (3) aufweist und mit dem Halteschlitz (10) auf den Winkelplattenabschnitt (3) aufsteckbar ist.

8. Befestigungseinrichtung nach einem der vorhergehenden Ansprüche **dadurch gekennzeichnet, dass** das Halteelement (8, 8', 8") ein oder mehrere Steckelemente (13, 13', 13") aufweist, die in entsprechende Steckaufnahmen (14, 14', 14") des feststehenden Bauteils einführbar sind.

9. Befestigungseinrichtung nach Anspruch 8, **dadurch gekennzeichnet, dass** die Steckelemente (13) kraft- und/oder reib- und/oder formschlüssig in den Steckaufnahmen (14) haltbar sind.

10. Befestigungseinrichtung nach Anspruch 9, **dadurch gekennzeichnet, dass** die Steckelemente (13', 13") durch eine Rastverbindung in den Steckaufnahmen (14', 14") haltbar sind.

11. Befestigungseinrichtung nach einem der Ansprüche 8 bis 10, **dadurch gekennzeichnet, dass** die Steckelemente (13, 13', 13") in dem oder den seitlich sich an den Bereich der Abwinklung (12) des Gurtendbeschlags (1) anschließenden Bereichen angeordnet sind.

12. Befestigungsvorrichtung nach einem der Ansprüche 8 bis 11, **dadurch gekennzeichnet, dass** das oder die Steckelemente (13) sich in oder entgegen der Erstreckungsrichtung des Grundplattenabschnitts (2) erstrecken und in entsprechend sich erstreckende Steckaufnahmen (14) des feststehenden Bauteils einführbar sind.

13. Befestigungseinrichtung nach Anspruch 12, **dadurch gekennzeichnet, dass** die Steckaufnahmen (14) durch Verformungen des Bodenblechs (5) des Kraftfahrzeugs gebildet sind.

14. Befestigungseinrichtung nach Anspruch 12, **dadurch gekennzeichnet, dass** die Steckaufnahmen durch auf dem Bodenblech des Kraftfahrzeugs fest angeordnete Bauteile gebildet sind.

15. Befestigungsvorrichtung nach einem der Ansprüche 8 bis 11, **dadurch gekennzeichnet, dass** das oder die Steckelemente (13', 13") sich senkrecht zum Grundplattenabschnitt (2) erstrecken und in entsprechend sich erstreckende Steckaufnahmen (14', 14") des feststehenden Bauteils einführbar sind.

16. Befestigungsvorrichtung nach Anspruch 15, **dadurch gekennzeichnet, dass** die Steckaufnahmen (14', 14") Ausnehmungen im Bodenblech (5) des Kraftfahrzeugs sind.

17. Befestigungsvorrichtung nach einem der vorhergehenden Ansprüche, **dadurch gekennzeichnet, dass** eine oder beide Längsseiten des in Einbaulage befindlichen Grundplattenabschnitts (2) an Anschlägen in Anlage sind, die das feststehende Bauteil aufweist.

18. Befestigungsvorrichtung nach Anspruch 17, **dadurch gekennzeichnet, dass** der oder die Anschläge aus der Ebene des Bodenblechs (5) hervorstehende Verformungen (17) des Bodenblechs (5) des Kraftfahrzeugs sind.

19. Befestigungsvorrichtung nach Anspruch 18, **dadurch gekennzeichnet, dass** die hervorstehenden Verformungen (17) die Steckaufnahmen bilden oder in denen die Steckaufnahmen (14") ausgebildet sind.

20. Befestigungsvorrichtung nach einem der vorhergehenden Ansprüche, **dadurch gekennzeichnet, dass** das Halteelement (8, 8', 8") ein Kunststoffbauteil, insbesondere ein Spritzguss-Kunststoffbauteil ist.

## Claims

1. A fixing device for attaching a belt end-fitting of a seat belt to a fixed component comprising a base plate section and also an angle plate section of the belt end-fitting which is bent at an angle with respect to the base plate section and on which an end of the seat belt is arranged, wherein the base plate section comprises a through recess, is adapted to be placed on the fixed component of the motor vehicle in its installation position and is connectable to the fixed component by means of a bolt member which passes through the recess in the base plate section and a further recess that is formed in the fixed component and is approximately coaxial with the recess in the base plate section, **characterised in that** the belt end-fitting (1) comprises a retaining element (8, 8', 8") which, in the installation position of the belt end-fitting (1), is connectable to a counter-retaining element of the fixed component in such a manner that the belt end-fitting (1) is pre-fixed in the installation position against the tensional force of the seat belt.

2. A fixing device in accordance with Claim 1, **characterised in that** the fixed component to which the base plate section is connectable is a floor pan of a motor vehicle.

3. A fixing device in accordance with either of Claims 1 or 2, **characterised in that** the further recess in the fixed component to which the base plate section is connectable is a threaded bore.

4. A fixing device in accordance with any of the Claims 1 to 3, **characterised in that** the retaining element is formed in one-piece with the belt end-fitting.

5. A fixing device in accordance with any of the Claims 1 to 3, **characterised in that** the retaining element (8, 8', 8") is a component that is connectable to the belt end-fitting (1).

6. A fixing device in accordance with Claim 5, **characterised in that** the retaining element (8, 8', 8") is connectable to the belt end-fitting (1) by means of a plug-in connection.

7. A fixing device in accordance with Claim 6, **characterised in that** the retaining element (8, 8', 8") comprises a through retaining slot (10) of approximately the same cross section as the cross section of the angle plate section (3) and is adapted to be placed on the angle plate section (3) by means of the retaining slot (10).

8. A fixing device in accordance with any of the preceding Claims, **characterised in that** the retaining element (8, 8', 8") comprises one or more plug-in elements (13, 13', 13") which are adapted to be inserted into corresponding plug seatings (14, 14', 14") of the fixed component.

9. A fixing device in accordance with Claim 8, **characterised in that** the plug-in elements (13) are adapted to be held in the plug seatings (14) in force-transmitting and/or frictional and/or positive manner.

10. A fixing device in accordance with Claim 9, **characterised in that** the plug-in elements (13', 13") are adapted to be held in the plug seatings (14', 14") by means of a latching connection.

11. A fixing device in accordance with any of the Claims 8 to 10, **characterised in that** the plug-in elements (13, 13', 13") are arranged **in that** region or those regions laterally adjoining the location of the bend (12) in the belt end-fitting (1).

12. A fixing device in accordance with any of the Claims 8 to 11, **characterised in that** the plug-in element (13) or the plug-in elements (13) extend in or against the direction of extent of the base plate section (2) and are adapted to be inserted into correspondingly extending plug seatings (14) of the fixed component.

13. A fixing device in accordance with Claim 12, **characterised in that** the plug seatings (14) are formed by deformations of the floor pan (5) of the motor vehicle.

14. A fixing device in accordance with Claim 12, **characterised in that** the plug seatings are formed by components that are firmly attached to the floor pan of the motor vehicle.

15. A fixing device in accordance with any of the Claims 8 to 11, **characterised in that** the plug-in element (13', 13") or the plug-in elements (13', 13") extend perpendicularly to the base plate section (2) and are adapted to be inserted into correspondingly extending plug seatings (14', 14") of the fixed component.

16. A fixing device in accordance with Claim 15, **characterised in that** the plug seatings (14', 14") are recesses in the floor pan (5) of the motor vehicle.

17. A fixing device in accordance with any of the preceding Claims, **characterised in that** one or both long sides of the base plate section (2) in the installation position are in contact with stop members which the fixed component comprises.

18. A fixing device in accordance with Claim 17, **characterised in that** the stop member or the stop members are deformations (17) of the floor pan (5) of the motor vehicle which protrude from the plane of the floor pan (5).

19. A fixing device in accordance with Claim 18, **characterised in that** the protruding deformations (17) form the plug seatings or the plug seatings (14") are formed therein.

20. A fixing device in accordance with any of the preceding Claims, **characterised in that** the retaining element (8, 8', 8") is a component of synthetic material, and in particular an injection moulded component of synthetic material.

## Revendications

1. Dispositif de fixation d'une ferrure d'extrémité d'une ceinture de sécurité sur une pièce fixe, comprenant une partie en plaque de base et une partie en équerre pliée par rapport à la pièce de base de la ferrure d'extrémité, sur laquelle une extrémité de la ceinture de sécurité est disposée, la partie en plaque de base présentant un évidement traversant, étant applicable dans sa position de montage sur la pièce fixe du véhicule automobile et étant fixable sur la pièce fixe au moyen d'une vis passant dans l'évidement de la partie en plaque de base et dans un autre évidement pratiqué dans la pièce fixe sensiblement coaxialement à l'évidement de la partie en plaque de base, **caractérisé en ce que** la ferrure d'extrémité (1) comprend un élément de retenue ou de maintien (8, 8', 8") raccordable à un contre-élément de retenue ou de maintien de la pièce fixe en position de montage de la ferrure d'extrémité (1), de manière à fixer en avance la ferrure d'extrémité (1) en position de montage contre la force de traction de la ceinture de sécurité.

2. Dispositif de fixation selon la revendication 1, **caractérisé en ce que** la pièce fixe à laquelle la partie en plaque de base est raccordable est une tôle de plancher d'un véhicule automobile.

3. Dispositif de fixation selon l'une des revendications 1 ou 2, **caractérisé en ce que** l'autre évidement dans la pièce fixe auquel la partie en plaque de base est raccordable est un alésage fileté.

4. Dispositif de fixation selon l'une des revendications 1 à 3, **caractérisé en ce que** l'élément de retenue ou de maintien est réalisé d'un seul tenant avec la ferrure d'extrémité.

5. Dispositif de fixation selon l'une des revendications 1 à 3, **caractérisé en ce que** l'élément de retenue ou de maintien (8, 8', 8") est une pièce raccordable à la ferrure d'extrémité (1).

6. Dispositif de fixation selon la revendication 5, **caractérisé en ce que** l'élément de retenue ou de maintien (8, 8', 8") est raccordable par connexion à fiche à la ferrure d'extrémité (1).

7. Dispositif de fixation selon la revendication 6, **caractérisé en ce que** l'élément de retenue ou de maintien (8, 8', 8") est pourvu d'une fente de maintien (10) traversante de section sensiblement égale à la section de la partie en équerre (3), et est enfichable sur la partie en équerre (3) par la fente de maintien (10).

8. Dispositif de fixation selon l'une des revendications précédentes, **caractérisé en ce que** l'élément de retenue ou de maintien (8, 8', 8") comprend un ou plusieurs éléments à fiche (13, 13', 13") insérables dans des logements de fiche correspondants (14, 14', 14") de la pièce fixe.

9. Dispositif de fixation selon la revendication 8, **caractérisé en ce que** les éléments à fiche (13) sont maintenus dans les logements de fiche (14) sous l'action d'une force et/ou par adhérence et/ou par correspondance de forme.

10. Dispositif de fixation selon la revendication 9, **caractérisé en ce que** les éléments à fiche (13', 13") sont maintenus dans les logements de fiche (14', 14") par une connexion à enclenchement.

11. Dispositif de fixation selon l'une des revendications 8 à 10, **caractérisé en ce que** les éléments à fiche (13, 13', 13") sont disposés sur la zone, ou les zones latéralement adjacentes à la zone de coude (12) de la ferrure d'extrémité (1).

12. Dispositif de fixation selon l'une des revendications 8 à 11, **caractérisé en ce que** le ou les éléments à fiche (13) s'étendent dans le sens d'extension de la partie en plaque de base (2), ou à l'opposé de celui-ci, et sont insérables dans des logements de fiche (14) de la pièce fixe d'extension correspondante.

13. Dispositif de fixation selon la revendication 12, **caractérisé en ce que** les logements de fiche (14) sont réalisés par des déformations de la tôle de plancher (5) du véhicule automobile.

14. Dispositif de fixation selon la revendication 12, **caractérisé en ce que** les logements de fiche sont réalisés par des pièces fixement disposées sur la tôle de plancher du véhicule automobile.

15. Dispositif de fixation selon l'une des revendications 8 à 11, **caractérisé en ce que** le ou les éléments à fiche (13', 13") s'étendent perpendiculairement à la partie en plaque de base (2), et sont insérables dans des logements de fiche (14', 14") de la pièce fixe d'extension correspondante.

16. Dispositif de fixation selon la revendication 15, **caractérisé en ce que** les logements de fiche (14', 14") sont des évidements dans la tôle de plancher (5) du véhicule automobile.

17. Dispositif de fixation selon l'une des revendications précédentes, **caractérisé en ce qu'**une longueur, ou les deux longueurs de la partie en plaque de base (2) se trouvant en position de montage reposent contre des butées dont est pourvue la pièce fixe.

18. Dispositif de fixation selon la revendication 17, **caractérisé en ce que** la ou les butées sont des déformations (17) de la tôle de plancher (5) du véhicule automobile, faisant saillie du plan de la tôle de plancher (5).

19. Dispositif de fixation selon la revendication 18, **caractérisé en ce que** les déformations (17) saillantes forment les logements de fiche ou **en ce que** les logements de fiche (14") sont réalisés dans celles-ci.

20. Dispositif de fixation selon l'une des revendications précédentes, **caractérisé en ce que** l'élément de retenue ou de maintien (8, 8', 8") est une pièce en matière plastique, en particulier une pièce en matière plastique moulée par injection.
